# EUROPEAN PATENT APPLICATION

(11) **EP 4 557 463 A1**
(43) Date of publication of application: **21.05.2025**
(21) Application number: 24198299.0
(22) Date of filing: 03.09.2024
(51) Int. Cl.: H01M 50/103, H01M 50/15, H01M 50/176, H01M 50/186, H01M 50/528, H01M 50/531, H01M 50/545, H01M 50/548, H01M 50/553, H01M 50/567, H01M 50/636, H01M 50/645, H01M 50/474, H01M 10/0525

(54) **RECHARGEABLE BATTERY WITH MODIFIED TERMINAL COMPRISIGN INJECTION PORT**

(30) Priority: 19.10.2023 KR 20230140694
(71) Applicant: Samsung SDI Co., Ltd., Yongin-si, Gyeonggi-do 17084 (KR)
(72) Inventor: PARK, Duseon, 17084 Yongin-si (KR); LEE, Byeonggwan, 17084 Yongin-si (KR); KIM, Duckhyun, 17084 Yongin-si (KR); JANG, Woonsuk, 17084 Yongin-si (KR)
(74) Representative: Marks & Clerk LLP

(57) **Abstract**

A rechargeable battery includes a prismatic can including a terminal hole, an electrode assembly accommodated in an internal space of the can and including a number of electrode tabs, a current collecting plate coupled to the electrode tabs, a rivet terminal coupled to the current collecting plate and extending into the terminal hole via an insulator to be installed on the can, and a sealing element coupled to the rivet terminal. The current collecting plate includes a plate-shaped portion and a tubular portion. The plate-shaped portion is coupled to the electrode tabs, and the liquid injection port is in the plate-shaped portion. The tubular portion surrounds the liquid injection port and is connected to one side of the plate portion. The rivet terminal is coupled to the tubular portion to contact an outer wall of the tubular portion, and the sealing element covers and seals the tubular portion.

## Description

### BACKGROUND

### 1. Field

This disclosure relates to a rechargeable battery.

### 2. Description of the Related Art

Rechargeable batteries have been used for a variety of purposes, including as a power source for small electronic devices, such as mobile phones and laptop computers, and as a power source for driving motors in transportation vehicles, such as electric vehicles and hybrid vehicles. In the latter case, battery modules in which a plurality of rechargeable batteries are combined have been used.

A rechargeable battery includes an electrode assembly, a can that accommodates the electrode assembly with an electrolyte, a cap plate that seals the can, and positive and negative terminals that allow current to flow to an external device. In addition, rechargeable batteries include various components, such as a positive electrode current collecting plate, a negative electrode current collecting plate, and a stopper that seals an electrolyte injection port.

### SUMMARY

The disclosure relates to various embodiments of a rechargeable battery configured to simplify component configuration and facilitate electrolyte injection and sealing of an electrolyte injection port.

In addition, the disclosure relates to various embodiments of a rechargeable battery configured to increase power and capacity of a battery module by increasing the degree of integration of the rechargeable batteries in a battery module by minimizing the dead space.

A rechargeable battery according to an embodiment includes a can, an electrode assembly, a current collecting plate, a rivet terminal, and a sealing cap. The can has a prismatic shape, and a terminal hole is provided in the can. The electrode assembly is accommodated in an internal space of the can, and electrode tabs are exposed on one side of the electrode assembly. The current collecting plate includes a plate-shaped portion and a tubular portion. The plate-shaped portion is coupled to the electrode tabs, and a liquid injection port is in the plate-shaped portion. The tubular portion surrounds the liquid injection port, is connected to one side of the plate-shaped portion, and extends through the terminal hole. The rivet terminal is coupled to the tubular portion, contacts an outer wall of the tubular portion, and is inserted into the terminal hole through an insulator in the can. The sealing element is coupled to the rivet terminal to seal the tubular portion.

The can may be in the shape of a hexagonal pillar. The can may include a top portion with a terminal hole located in the center, and a side portion connected to an edge of the top portion. A hexagonal cap plate may be coupled to an end of the side portion to seal the can. The electrode assembly may have a structure in which the electrodes are arranged in a quadrilateral sheet shape and are sequentially stacked in a width direction. The width of the electrodes may gradually increase from an outer portion of the electrode assembly toward the center of the electrode assembly.

The can may have a quadrilateral pillar shape. The can may include a top portion with a terminal hole located in the center and a side portion connected to an edge of the top portion. A quadrilateral cap plate may be coupled to the end of the side portion to seal the can. The electrode assembly may have a structure in which the electrodes are arranged in a quadrilateral sheet shape are sequentially stacked in the width direction. The electrodes may have the same width and the same height.

The electrode tabs may be separated into a first region and a second region and located at a distance from each other. The electrode tabs in the first region may be bent in a first direction, and the electrode tabs in the second region may be bent in a direction opposite to the first direction. The plate-shaped portion may include acircular, quadrilateral, or hexagonal metal plate covering the first region and the second region, and the plate-shaped portion may be fixed to the electrode tabs by welding lines.

The liquid injection port may have an arc shape and may be offset from the electrode tabs. The tubular portion may be cylindrical and may guide injection of an electrolyte. A center hole may be located in the rivet terminal, and the tubular portion may extend into the center hole and be physically and electrically connected to the rivet terminal. A sealing ball may be inside the tubular portion to double-seal the liquid injection port with the sealing element.

A rechargeable battery according to another embodiment includes a can, an electrode assembly, a current collecting plate, a rivet terminal, and a cap plate. The can includes a top portion in which the terminal hole is located and a side portion connected to an edge of the top portion. The electrode assembly is accommodated in an internal space of the can and includes first electrode tabs located on one side toward the top and second electrode tabs located on a side opposite to the first electrode tabs. The current collecting plate includes a plate-shaped portion and a tubular portion. The plate-shaped portion is coupled to the first electrode tabs, and a liquid injection port is located on the plate-shaped portion. The tubular portion surrounds the liquid injection port, is connected to one side of the plate-shaped portion, and extends through the terminal hole. The rivet terminal is coupled to the tubular portion, in contact with an outer wall of the tubular portion, and extends into the terminal hole through an insulator in the top portion. The cap plate is coupled to the second electrode tabs and is coupled to an end of the side portion to seal the can.

The electrode assembly may have a structure in which first electrodes and second electrodes are arranged in the form of a quadrilateral sheet and are alternately stacked one-by-one in the width direction with a separator therebetween. The first electrode tabs may extend from the first electrodes to one side, and the second electrode tabs may extend from the second electrodes to the opposite side of the electrode assembly.

The first electrode tabs may be in the first region and the second region at a distance from each other, and may be bent in opposite directions in the first region and the second region. The second electrode tabs may be located in a third region and in a fourth regions at a distance from each other and may be bent in opposite directions in the third and fourth regions.

The plate-shaped portion may include a circular, quadrilateral, or hexagonal metal plate covering the first region and the second region, and may be coupled to first electrode tabs by welding lines. The cap plate may be coupled to the second electrode tabs by welding lines.

The liquid injection port may have an arc shape and may be offset from the first electrode tabs. The tubular portion may be cylindrical and may guide injection of an electrolyte. A center hole may be located in the rivet terminal, and the tubular portion may extend into the center hole and be physically and electrically connected to the rivet terminal. The rechargeable battery may further include a sealing ball inside the tubular portion to block the liquid injection port and a sealing element coupled to the rivet terminal to cover the tubular portion.

At least some of the above and other features of the invention are set out in the claims.

According to embodiments, since the liquid injection port is located in the rivet terminal and the current collecting plate, the component configuration may be simplified and mechanical coupling and electrical connection of the current collecting plate and the rivet terminal may be facilitated. In addition, injection of electrolyte and sealing of the liquid injection port may be facilitated and the degree of integration may be increased when a plurality of rechargeable batteries are arranged together to form a battery module.

### BRIEF DESCRIPTION OF THE DRAWINGS

FIG. 1 is a perspective view of a rechargeable battery according to a first embodiment.
FIG. 2 is a cross-sectional view of the rechargeable battery shown in FIG. 1.
FIG. 3 is an exploded perspective view of an electrode assembly and a current collecting plate of the rechargeable battery shown in FIG. 2.
FIG. 4 is an enlarged cross-sectional view of a portion of the electrode assembly shown in FIG. 3.
FIG. 5 is a plan view of a current collecting plate in the rechargeable battery shown in FIG. 2.
FIG. 6 is an exploded perspective view of an electrode assembly and a cap plate of the rechargeable battery shown in FIG. 2 in which the rechargeable battery is upside down.
FIG. 7 is a plan view of the cap plate shown in FIG. 6.
FIG. 8 is an enlarged partial view of the rechargeable battery shown in FIG. 2.
FIG. 9 is an enlarged partial plan view of a current collecting plate in the rechargeable battery shown in FIG. 2.
FIG. 10 is a schematic perspective view of a battery module according to an embodiment.
FIG. 11 is a perspective view of a rechargeable battery according to a second embodiment.
FIG. 12 is an exploded perspective view of an electrode assembly, a current collecting plate, and a cap plate in a rechargeable battery according to the second embodiment.

### DETAILED DESCRIPTION

Hereinafter, the disclosure is described more fully with reference to the accompanying drawings, in which embodiments of the disclosure are shown. As those skilled in the art would realize, the described embodiments may be modified in various different ways, all without departing from the scope of the disclosure.

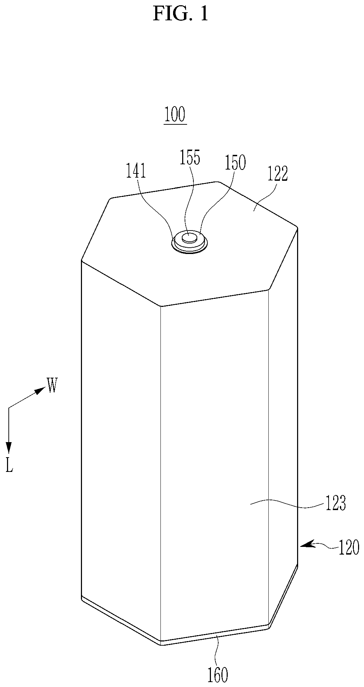

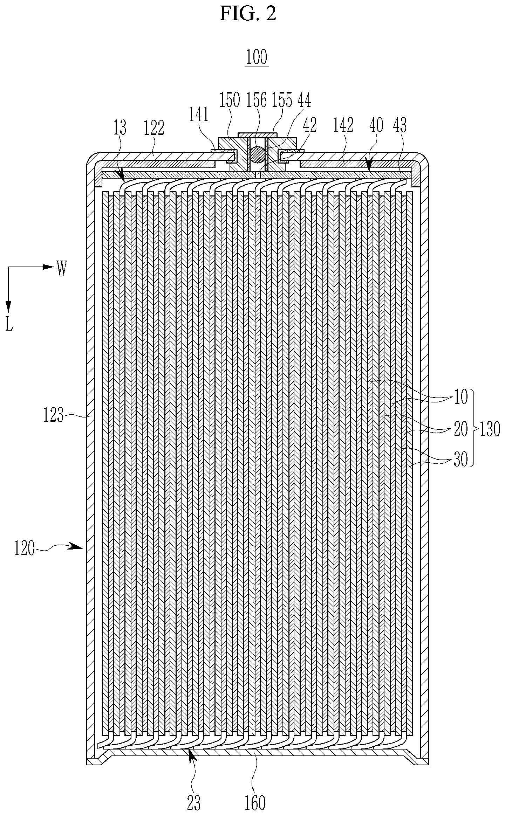

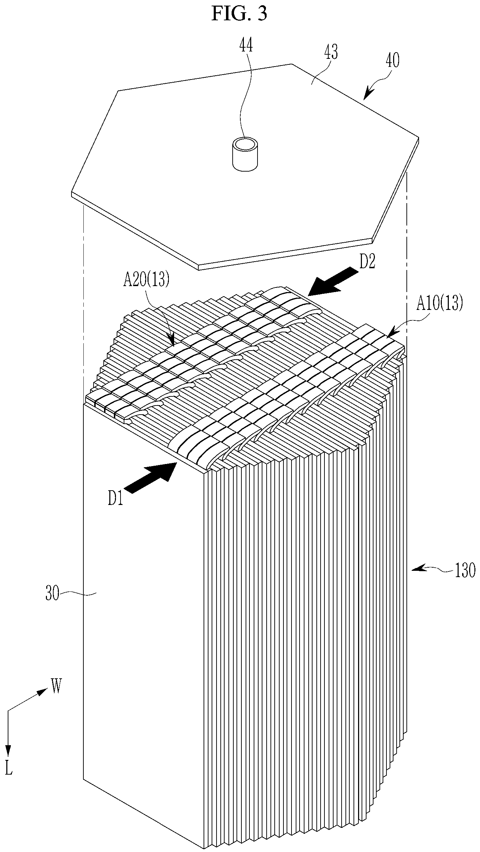

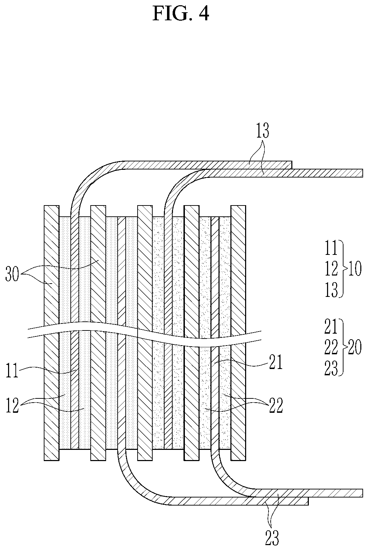

FIG. 1 is a perspective view of a rechargeable battery according to a first embodiment, and FIG. 2 is a cross-sectional view of the rechargeable battery shown in FIG. 1. FIG. 3 is an exploded perspective view of an electrode assembly and a current collecting plate of the rechargeable battery shown in FIG. 2, and FIG. 4 is a partially enlarged cross-sectional view of the electrode assembly shown in FIG. 3.

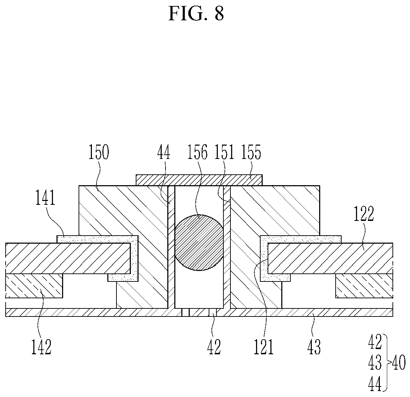

Referring to FIGS. 1 to 4, a rechargeable battery 100 according to one or more embodiments of the present disclosure includes a can 120 in which a terminal hole 121 (see FIG. 8) is located, an electrode assembly 130 accommodated inside the can 120, a rivet terminal 150 installed in the terminal hole 121 via an insulator 141, and a current collecting plate 40 that physically and electrically connects a first electrode 10 of the electrode assembly 130 to the rivet terminal 150. In addition, in one or more embodiments, the rechargeable battery 100 may include a cap plate 160 that is coupled to an end (e.g., a lower end) of the can 120 and seals the can 120.

The can 120 is formed in a prismatic shape, for example, a hexagonal pillar shape. In one or more embodiments, the can 120 includes a top portion 122 and a side portion 123 connected to an edge or edges of the top portion 122. When the rechargeable battery 100 is turned upside down, the top portion 122 may be referred to as a bottom portion.

The top portion 122 may be a hexagonal metal plate, and the side portion 123 may be a hollow hexagonal pillar-shaped metal tube. A terminal hole 121 (see FIG. 8) for installing the rivet terminal 150 is located in the top portion 122. In one or more embodiments, the can 120 may be formed of steel, stainless steel, aluminium, or aluminium alloy.

Hereinafter, a direction parallel to a central axis of the can 120 is referred to as a `length direction L', and a direction in which two surfaces of side portions 123 face each other among the directions perpendicular to the length direction L is referred to as a 'width direction W'. The six surfaces of the side portion 123 include three pairs of surfaces facing each other, and a direction in which a pair of surfaces face each other is referred to as the width direction W for convenience. In FIG. 2, the length direction L is identical to a vertical direction of the drawing, and the width direction W is identical to a horizontal direction of the drawing.

The electrode assembly 130 may have a structure in which a plurality of electrodes 10 and 20 are sequentially stacked in the width direction W. Each of the plurality of electrodes 10 and 20 may be formed in a quadrilateral (e.g., rectangular or square) sheet shape. A longer side of each of the electrodes 10 and 20 may be parallel (or substantially parallel) to the length direction L, and a shorter side of each of the electrodes 10 and 20 may be parallel (or substantially parallel) to any two of the six surfaces of the side portion 123 that face each other.

In one or more embodiments, the electrode assembly 130 may include a plurality of first electrodes 10 and a plurality of second electrodes 20 arranged alternately one-by-one in the width direction W and a plurality of separators 30 located between the first electrodes 10 and the second electrodes 20, respectively. Each of the plurality of separators 30 may be formed in a quadrilateral sheet shape.

The first electrode 10 may include a first substrate 11, a first composite material layer 12 on the first substrate 11, and a first electrode tab 13 extending from one end (e.g., the upper end) of the first substrate 11. The second electrode 20 may include a second substrate 21, a second composite material layer 22 on the second substrate 21, and a second electrode tab 23 extending from the opposite end (e.g., the lower end) of the second substrate 21.

In a lithium-ion rechargeable battery, the first substrate 11 may be formed of aluminium foil, and the first composite material layer 12 may include transition metal oxides, such as LiCoO₂, LiNiO₂, LiMn₂O₄, Li(NiCoAl)O₂, LiFePO₄, Li(NiCoMn)O₂, etc, conductive materials, binders, etc. The second substrate 21 may include copper foil or nickel foil, and the second composite material layer 22 may include graphite, a conductive material, a binder, etc. The first electrode 10 may be referred to as a positive electrode, and the second electrode 20 may be referred to as a negative electrode. The separator 30 may include a polymer material, such as polyethylene (PE) or polypropylene (PP), and the separator 30 may insulate the first electrode 10 and the second electrode 20 and allow the movement of lithium ions.

The electrode assembly 130 may include the plurality of electrodes 10 and 20 with different widths to form a hexagon on a plane (when the electrode assembly 130 is viewed from above). Hereinafter, 'on a plane' refers to when the electrode assembly 130 is viewed from above.

Among the plurality of electrodes 10 and 20, the two outermost electrodes may have the smallest width, and the electrode located at the center of the electrode assembly 130 may have the largest width. The width of the plurality of electrodes 10 and 20 may gradually (or in a stepwise manner) increase from the outer edge of the electrode assembly 130 toward the center. In one or more embodiments, the plurality of electrodes 10 and 20 may have the same (or substantially the same) height in the length direction L.

In an embodiment in which an electrode assembly wound in a cylindrical shape is located inside the hexagonal pillar-shaped can 120, a dead space may exist between the electrode assembly and the corner of the can 120, thereby reducing battery capacity. In the rechargeable battery 100 of the present embodiment, the electrode assembly 130 may be configured such that there is minimal dead space inside the hexagonal pillar-shaped can 120, and thus, battery power and capacity may be increased compared to an embodiment in which the electrode assembly is cylindrical and the can is hexagonal pillar-shaped.

The plurality of first electrode tabs 13 may be located on one side (e.g., the upper side) of the electrode assembly 130, and the plurality of second electrode tabs 23 may be located on the opposite side (e.g., the lower side) of the electrode assembly 130. The plurality of first electrode tabs 13 may be bent in one direction and overlap neighboring first electrode tabs 13, and the plurality of second electrode tabs 23 may also be bent in one direction to overlap neighboring second electrode tabs 23. Each of the plurality of first electrode tabs 13 and the plurality of second electrode tabs 23 may be bent to overlap and press against each other to form a flat (or generally flat) surface.

Each of the plurality of first electrodes 10 may include two first electrode tabs 13 located at a distance from each other and on the plane of the electrode assembly 130. The plurality of first electrode tabs 13 may be divided or separated into a first region A10 and a second region A20. The plurality of first electrode tabs 13 may be located side-by-side in the width direction W in each of the first region A10 and the second region A20.

In the first region A10, the plurality of first electrode tabs 13 may be bent in the first direction D1, and in the second region A20, the plurality of first electrode tabs 13 may be bent in the second direction D2 different than the first direction D1. The second direction D2 may be a reverse direction (i.e., an opposite direction) of the first direction D1.

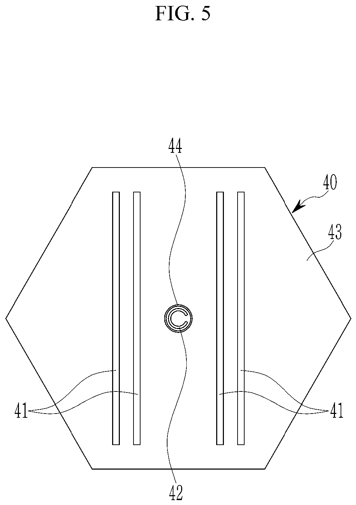

FIG. 5 is a plan view of a current collecting plate in the rechargeable battery shown in FIG. 2.

Referring to FIGS. 2 to 5, the current collecting plate 40 may be coupled to the plurality of first electrode tabs 13 by laser welding or the like. A plurality of welding lines 41 resulting from welding the first electrode tabs 13 to the current collecting plate 40 may be located on the current collecting plate 40. The plurality of welding lines 41 correspond to the first region A10 and the second region A20 and are located parallel (or substantially parallel) to the width direction W. The current collecting plate 40 may have the same polarity as the plurality of first electrodes 10 and may function as a positive current collecting plate. Inside the can 120, the current collecting plate 40 may face the top portion 122 of the can 120.

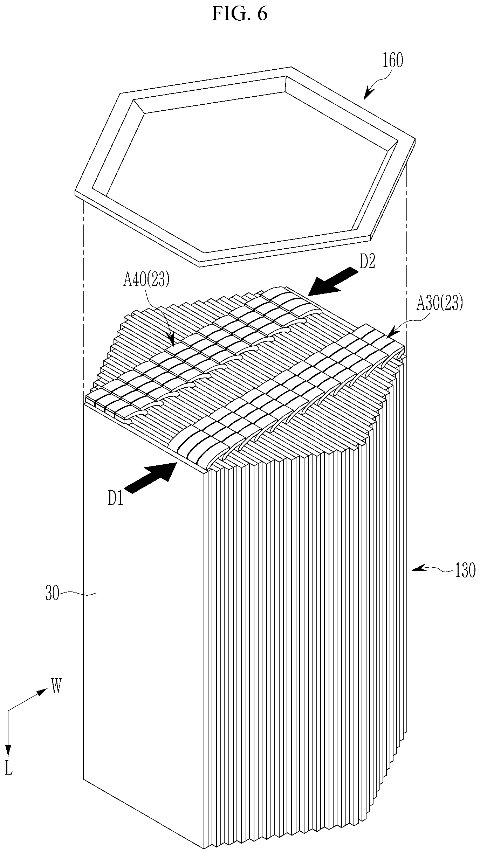

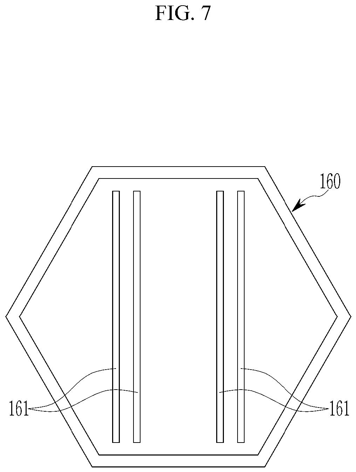

FIG. 6 is an exploded perspective view of an electrode assembly and a cap plate of the rechargeable battery shown in FIG. 2 in which the rechargeable battery is upside down, and FIG. 7 is a plan view of the cap plate shown in FIG. 6.

Referring to FIGS. 6 and 7, each of the plurality of second electrodes 20 may include two second electrode tabs 23 located at a distance from each other, and the plurality of second electrode tabs 23 may be divided or separated into a third region A30 and a fourth region A40. The plurality of second electrode tabs 23 may be located side-by-side in the width direction W in each of the third region A30 and the fourth region A40.

In the third region A30, the plurality of second electrode tabs 23 may be bent in the first direction D1, and in the fourth region A40, the plurality of second electrode tabs 23 may be bent in the second direction D2 different than the first direction D1. The second direction D2 may be a reverse direction (i.e., an opposite direction) of the first direction D1.

The cap plate 160 may be located on one side of the electrode assembly 130 to face the plurality of second electrode tabs 23 and may be coupled to the plurality of second electrode tabs 23 by a method, such as laser welding. A plurality of welding lines 161 resulting from welding the second electode tabs 23 to the cap plate 160 may be located on the cap plate 160. The plurality of welding lines 161 correspond to the third region A30 and the fourth region A40 and are parallel (or substantially parallel) to the width direction W. The cap plate 160 may be formed of a hexagonal metal plate and may have the same polarity as the plurality of second electrodes 20 to function as a negative current collecting plate.

Referring back to FIG. 2, the edge or edges of the cap plate 160 may be coupled to the end of the side portion 123 by a method, such as welding. The can 120 has the same polarity as the second electrode 20 and the cap plate 160 and may function as a terminal (negative terminal) of the second electrode 20. In one or more embodiments, an insulating plate 142 may be between the top portion 122 of the can 120 and the current collecting plate 40. The insulating plate 142 may prevent a short-circuit by insulating the current collecting plate 40 and the top portion 122, which have opposite polarities.

The rechargeable battery 100 according to one or more embodiments of the present disclosure does not have a separate negative current collecting plate and uses the cap plate 160 for sealing as a negative current collecting plate, thereby simplifying the configuration.

In a configuration in which the plurality of electrode tabs 13 and 23 are bent to overlap each other, the current collection efficiency of the electrodes 10 and 20 may be increased and the quality of welding with the current collecting plate 40 and the cap plate 160 may be improved. In addition, since a height of a portion of the total height of the electrode assembly 130 that is not related to the composite materials 12 and 22 may be minimized (or at least reduced), the capacity of the rechargeable battery 100 may be increased.

In addition, even if an abnormality, such as pressure unevenness, occurs in the current collecting plate 40 during the process of welding the plurality of first electrode tabs 13 to the current collecting plate 40, the first electrode tab 13 in at least one of the the first region A10 or the second region A20 may maintain constant (or substantially constant) welding quality with the current collecting plate 40. Similarly, even if an abnormality, such as pressure unevenness, occurs in the cap plate 160 during the process of welding the plurality of second electrode tabs 23 to the cap plate 160, the second electrode tab 23 in at least one of the third region A30 or the fourth region A40 may maintain constant (or substantially constant) welding quality with the cap plate 160.

In this manner, the structure in which the plurality of electrode tabs 13 and 23 are divided or separated into two regions and bent in the opposite directions may be a complementary welding structure with respect to the current collecting plate 40 or the cap plate 160.

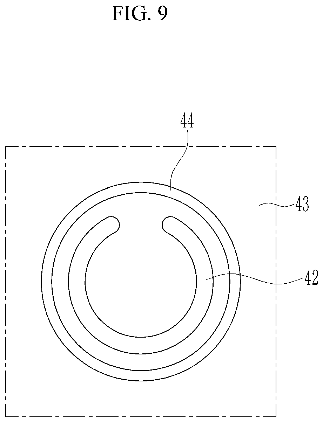

FIG. 8 is a partially enlarged view of the rechargeable battery shown in FIG. 2, and FIG. 9 is a partially enlarged plan view of the current collecting plate in the rechargeable battery shown in FIG. 2.

Referring to FIGS. 8 and 9, the current collecting plate 40 includes a plate-shaped portion 43 in which the liquid injection port 42 is located and a tubular portion 44 surrounding the liquid injection port 42 and coupled to and extending from one side (e.g., upper side) of the plate-shaped portion 43.

The plate-shaped portion 43 is located between the electrode assembly 130 and the top portion 122, and may be formed of a metal plate of various shapes, such as a hexagon, a quadrilateral, or a circle. The plate-shaped portion 43 overlaps the plurality of first electrode tabs 13 and may be coupled to (e.g., integrally fixed with) the plurality of first electrode tabs 13 by the plurality of welding lines 41. In FIG. 8, the plate-shaped portion 43 is depicted as a hexagonal metal plate as an example, but the shape of the plate-shaped portion 43 is not limited to the illustrated embodiment.

The liquid injection port 42 is an opening for electrolyte injection and may be located in the center (e.g., or substantially the center) of the plate-shaped portion 43. The liquid injection port 42 may have various shapes, such as a circle or a circular arc (e.g., crescent shaped). In FIG. 9, an arc-shaped liquid injection port 42 is shown as one embodiment.

The arc-shaped liquid injection port 42 has a larger length compared to the circular liquid injection port, so when the electrolyte is injected through a portion of the liquid injection port 42, air inside the can 120 may be smoothly discharged through another portion of the liquid injection port 42. The current collecting plate 40 provided with the arc-shaped liquid injection port 42 may facilitate injection of the electrolyte solution.

The liquid injection port 42 may not overlap the plurality of first electrode tabs 13 in the length direction L. In one or more embodiments, the liquid injection port 42 may be located between the first region A10 and the second region A20, and may be offset from the plurality of first electrode tabs 13 in the width direction W. In one or more embodiments, when the electrolyte is injected through the liquid injection port 42, hinderance of the injection and diffusion of the electrolyte by the plurality of first electrode tabs 13 may be prevented, and thus damage to the first electrode tab 13 due to electrolyte injection may be prevented (or at least mitigated).

The tubular portion 44 is a hollow cylindrical metal tube and is coupled to one side (e.g., the upper side) of the plate-shaped portion 43. An outer diameter of the tubular portion 44 is smaller than a diameter of the terminal hole 121, and the tubular portion 44 may protrude to the outside (e.g., the upper side) of the top portion 122 through the terminal hole 121. The rivet terminal 150 may be installed in the terminal hole 121 via the insulator 141. The insulator 141 insulates the rivet terminal 150 and the top portion 122 and may seal the terminal hole 121 around the rivet terminal 150.

A center hole 151 passing through the rivet terminal 150 may be located in the center (or substantially the center) of the rivet terminal 150, and the tubular portion 44 may extend through the center hole 151 of the rivet terminal 150 and be coupled to the rivet terminal 150. The tubular portion 44 and the rivet terminal 150 may be coupled (e.g., integrally fixed) by welding or the like. The rivet terminal 150 may be in contact with an outer surface of the tubular portion 44 and a portion of one surface (e.g., the upper surface) of the plate-shaped portion 43 and may have the same polarity as the first electrode 10 through the current collecting plate 40 to function as a terminal (a positive terminal) of the electrode 10.

The tubular portion 44 of the current collecting plate 40 may be a portion physically and electrically connected to the rivet terminal 150 and may function as a guide tube that guides the injection of the electrolyte. After the current collecting plate 40 and the rivet terminal 150 are coupled together, the electrolyte may be injected into the inside of the can 120 through the tubular portion 44, and after the electrolyte injection is completed, the sealing element 155 may be fixed to upper portions of the tubular portion 44 and the rivet terminal 150. The sealing element 155 may be coupled (e.g., fixed) to the rivet terminal 150 by welding or the like. Although the sealing element 155 is shown as a shape of a cap in FIG. 8, the disclosure is not limited thereto. The sealing element 155 may have various shapes which may seal the tubular portion 44, such as a shape of a stopper inserted into the tubular portion 44.

In one or more embodiments, before the sealing element 155 is installed, a sealing ball 156 may be positioned inside the tubular portion 44 to double-seal the liquid injection port 42. The sealing ball 156 includes a polymer material and may include, for example, perfluoroalkoxy (PFA), but is not limited to this embodiment.

In the rechargeable battery 100 having the configuration described above, a separate liquid injection port is not provided in the can 120 or the cap plate 160 but the liquid injection port is located in the rivet terminal 150 and the current collecting plate 40, and thus, the configuration may be simplified. In addition, in the rechargeable battery 100 having the configuration described above, mechanical coupling and electrical connection between the current collecting plate 40 and the rivet terminal 150 may be facilitated and injection of electrolyte and sealing of the liquid injection port 42 may be facilitated. Moreover, the rechargeable battery 100 having the configuration described above may increase the degree of integration when forming a battery module.

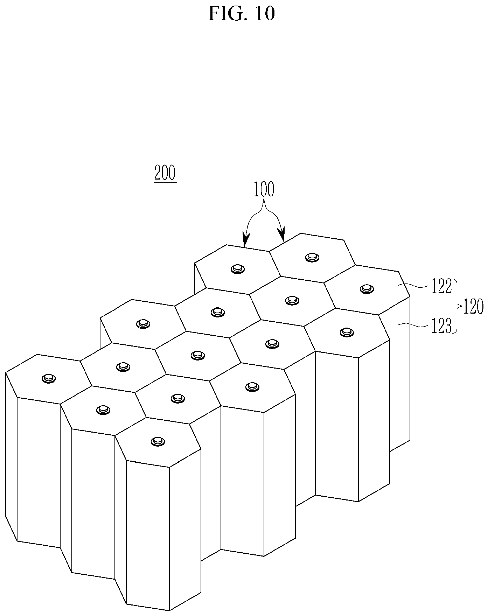

FIG. 10 is a schematic perspective view of a battery module according to an embodiment.

Referring to FIG. 10, a battery module 200 includes a plurality of rechargeable batteries 100 arranged so that the side portions 123 of the can 120 are in contact with each other. The plurality of rechargeable batteries 100 may be arranged in close contact with each other on the side portions 123 of the hexagonal pillar-shaped can 120 without dead space therebetween. FIG. 10 shows some of the plurality of rechargeable batteries 100 of the battery module 200.

In a related art battery module including a plurality of cylindrical rechargeable batteries, a dead space occurs between neighboring rechargeable batteries, but in the battery module 200 of the present embodiment, a dead space does not occur between neighboring rechargeable batteries 100. Accordingly, the battery module 200 of the present embodiment has a structure that increases space efficiency and is therefore advantageous for increasing power and capacity.

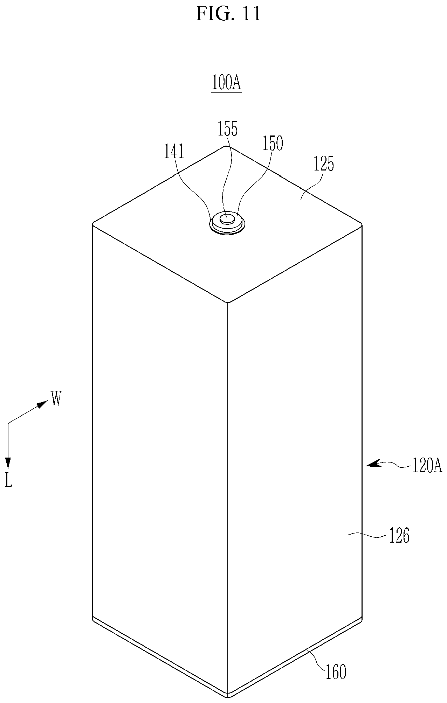

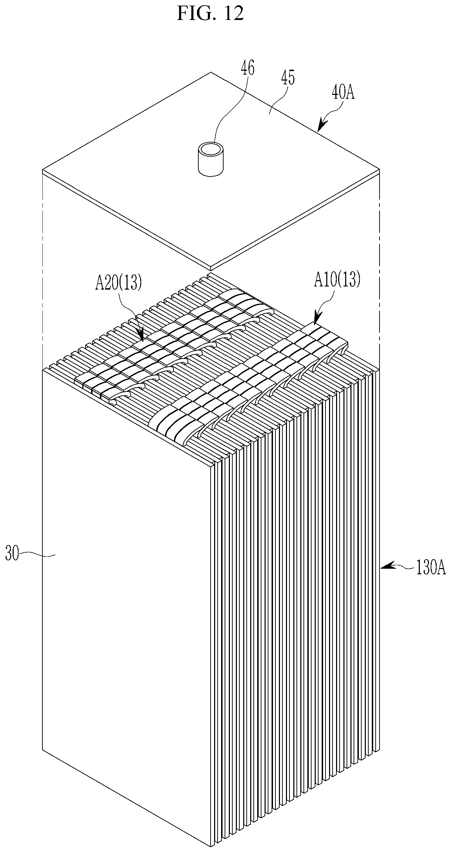

FIG. 11 is a perspective view of a rechargeable battery according to a second embodiment, and FIG. 12 is an exploded perspective view of an electrode assembly, a current collecting plate, and a cap plate in a rechargeable battery according to the second embodiment. The rechargeable battery of the second embodiment has a configuration that is the same as or similar to that of the first embodiment described above, except for the configuration described below.

Referring to FIGS. 11 and 12, a can may have a quadrilateral pillar shape. In one or more embodiments, a can 120A includes a quadrilateral top portion 125 and a side portion 126 connected to an edge or edges of the top portion 125. The top portion 125 may be a square or rectangular metal plate, and the side portion 126 may be a hollow square or rectangular pillar-shaped metal tube. In FIG. 11, an embodiment in which the top portion 125 is square is shown. A terminal hole may be located in the center of the top portion 125, and the rivet terminal 150 may be coupled to the terminal hole via the insulator 141.

The four surfaces of the side portion 126 include two pairs of surfaces facing each other, and a direction in which a pair of surfaces face each other is referred to herein as the 'width direction W'. An electrode assembly 130A may include a plurality of first electrodes 10 and a plurality of second electrodes 20 alternately stacked one-by-one in the width direction W with a separator 30 therebetween (see FIG. 4). The plurality of first electrodes 10 and the plurality of second electrodes 20 may have the same width and the same length (or substantially the same width and substantially the same length).

A current collecting plate 40A has the same configuration as the current collecting plate 40 of the first embodiment, except that the plate-shaped portion 45 is quadrilateral. The current collecting plate 40A may be coupled (e.g., integrally fixed) with the plurality of first electrode tabs 13 by laser welding or the like. The cap plate 160 may be formed of a quadrilateral metal plate and may be coupled (e.g., integrally fixed) to a plurality of second electrode tabs by laser welding or the like. An edge or edges of the cap plate 160 may be coupled (e.g., fixed) to the side portion 126 of the can 120A.

The rivet terminal 150 is physically and electrically connected to the tubular portion 46 of the current collecting plate 40A and is installed in the terminal hole via the insulator 141. After the electrolyte is injected into the interior of the can 120A through the tubular portion 46, a sealing ball may be positioned within the tubular portion 46, and the sealing element 155 may be in upper portions of the tubular portion 46 and the rivet terminal 150 to seal the liquid injection port (see FIG. 8).

Since the rechargeable battery 100A of the present embodiment has a quadrilateral pillar shape, when a plurality of rechargeable batteries 100A are arranged or positioned together to form a battery module, the plurality of rechargeable batteries 100A may be in close contact with each other at the side portions of the can 120A without any dead space therebetween. Accordingly, these battery modules have a structure that increases space efficiency and are thus advantageous for increasing power and capacity.

In the first and second embodiments described above, the can has a hexagonal pillar shape and a quadrilateral pillar shape, respectively, but the shape of the can is not limited to the illustrated examples, and any one of various shapes of prismatic shapes may be selected and used. In one or more embodiments in which a plurality of rechargeable batteries are arranged or positioned together to form a battery module, any prismatic shape that allows the side portions of the cans to be positioned next to each other without dead space therebetween may be used.

Although the embodiments of the disclosure have been described, the disclosure is not limited thereto and may be implemented to be variously modified within the scope of the claims, the detailed description of the invention, and the accompanying drawings, which also falls within the scope of the disclosure.

## Claims

1. A rechargeable battery comprising:
a prismatic can comprising a terminal hole;
an electrode assembly accommodated in an internal space of the can and comprising a plurality of electrode tabs exposed on one side;
a current collecting plate comprising a plate-shaped portion coupled to the plurality of electrode tabs, a liquid injection port in the plate-shaped portion, and a tubular portion surrounding the liquid injection port, connected to one side of the plate-shaped portion, and extending through the terminal hole;
a rivet terminal coupled to the tubular portion, contacting an outer wall of the tubular portion, and in the terminal hole;
an insulator between the rivet terminal and the can; and
a sealing element coupled to the rivet terminal to seal the tubular portion.

2. The rechargeable battery of claim 1, wherein:
the can has a hexagonal pillar shape and comprises a top portion and a side portion coupled to at least one edge of the top portion,
the terminal hole is in a center of the top portion, and
the rechargeable battery further comprises a hexagonal cap plate coupled to an end of the side portion to seal the can.

3. The rechargeable battery of claim 2, wherein:
the electrode assembly comprises a plurality of electrodes arranged in a quadrilateral sheet shape and sequentially stacked in a width direction, and
a width of the plurality of electrodes gradually increases from an outer portion of the electrode assembly toward a center of the electrode assembly.

4. The rechargeable battery of claim 1, wherein:
the can has a quadrilateral pillar shape and comprises a top portion and a side portion coupled to at least one edge of the top portion,
the terminal hole is in a center of the top portion, and
the rechargeable battery further comprises a quadrilateral cap plate coupled to an end of the side portion to seal the can.

5. The rechargeable battery of claim 4, wherein:
the electrode assembly comprises a plurality of electrodes arranged in a quadrilateral sheet shape and sequentially stacked in a width direction, and
the plurality of electrodes have a same width and a same height.

6. The rechargeable battery of any one of claims 1 to 5, wherein:
the plurality of electrode tabs is separated into a first region and a second region at a distance away from each other,
the plurality of electrode tabs in the first region is bent in a first direction, and
the plurality of electrode tabs in the second region is bent in a second direction opposite to the first direction.

7. The rechargeable battery of claim 6, wherein:
the plate-shaped portion comprises a metal plate in a circular, quadrilateral, or hexagonal shape covering the first region and the second region, and the metal plate is coupled to the plurality of electrode tabs by a plurality of welding lines.

8. The rechargeable battery of any one of claims 1 to 7, wherein:
the liquid injection port has an arc shape and is offset from the plurality of electrode tabs, and
the tubular portion is cylindrical and is configured to guide the injection of an electrolyte into the can.

9. The rechargeable battery of any one of claims 1 to 8, further comprising:
a center hole in the rivet terminal, wherein the tubular portion extends into the center hole and is physically and electrically connected to the rivet terminal, and
a sealing ball inside the tubular portion to double-seal the liquid injection port with the sealing element.

10. A rechargeable battery comprising:
a prismatic can comprising a top portion comprising a terminal hole and a side portion coupled to at least one edge of the top portion;
an electrode assembly accommodated in an internal space of the can and comprising a plurality of first electrode tabs on one side of the electrode assembly toward the top portion and a plurality of second electrode tabs on a side of the electrode assembly opposite to the plurality of first electrode tabs;
a current collecting plate comprising a plate-shaped portion coupled to the plurality of first electrode tabs, a liquid injection port in the plate-shaped portion, and a tubular portion surrounding the liquid injection port, connected to one side of the plate-shaped portion, and extending through the terminal hole;
a rivet terminal coupled to the tubular portion, contacting an outer wall of the tubular portion, and extending into the terminal hole;
an insulator between the rivet terminal and the can; and
a cap plate coupled to the plurality of second electrode tabs and coupled to an end of the side portion to seal the can.

11. The rechargeable battery of claim 10, wherein:
the electrode assembly comprises a plurality of first electrodes and a plurality of second electrodes arranged in a quadrilateral sheet and alternately stacked one-by-one in a width direction with a separator therebetween,
the plurality of first electrode tabs extend from one side of the electrode assembly from the plurality of first electrodes, and
the plurality of second electrode tabs extend from an opposite side of the electrode assembly from the plurality of second electrodes.

12. The rechargeable battery of claim 11, wherein:
the plurality of first electrode tabs is separated into a first region and a second region at a distance from each other and the plurality of first electrode tabs is bent in opposite directions in the first region and the second region, and
the plurality of second electrode tabs is separated into a third region and a fourth region at a distance from each other and the plurality of second electrode tabs is bent in opposite directions in the third region and the fourth region.

13. The rechargeable battery of claim 12, wherein:
the plate-shaped portion comprises a metal plate in a circular, quadrilateral, or hexagonal shape covering the first region and the second region, and the metal plate is coupled to the plurality of first electrode tabs by a first plurality of welding lines, and
the cap plate is coupled to the plurality of second electrode tabs by a second plurality of welding lines.

14. The rechargeable battery of any one of claims 10 to 13, wherein:
the liquid injection port has an arc shape and is offset from the plurality of first electrode tabs, and
the tubular portion is cylindrical and is configured to guide injection of an electrolyte.

15. The rechargeable battery of any one of claims 10 to 14, further comprising:
a center hole in the rivet terminal, wherein the tubular portion extends into the center hole and is physically and electrically connected to the rivet terminal,
a sealing ball inside the tubular portion to block the liquid injection port, and
a sealing element coupled to the rivet terminal to cover the tubular portion.
